Europäisches Patentamt

European Patent Office

Office européen des brevets

(19)

(11) Numéro de publication: **0 008 980**
**B1**

(12) **FASCICULE DE BREVET EUROPEEN**

(45) Date de publication du fascicule du brevet: 06.04.83

(51) Int. Cl.³: **G 02 B 5/14**

(21) Numéro de dépôt: **79400594.2**

(22) Date de dépôt: **29.08.79**

(54) Fiche de connecteur fibre à fibre avec élément de raccordement à un câble optique.

(30) Priorité: 29.08.78 FR 7824865

(43) Date de publication de la demande:
**19.03.80 Bulletin 80/6**

(45) Mention de la délivrance du brevet:
**06.04.83 Bulletin 83/14**

(84) Etats contractants désignés:
**AT BE CH DE FR GB IT LU NL SE**

(56) Documents cités:
**DE - A - 2 522 804**
**DE - A - 2 718 027**
**DE - A - 2 757 214**
**DE - B - 2 518 319**
**FR - A - 2 282 650**
**US - A - 3 864 018**

(73) Titulaire: **COMPAGNIE GENERALE D'ELECTRICITE**
**Société anonyme dite:**
**54, rue La Boétie**
**F-75382 Paris Cedex 08 (FR)**

(72) Inventeur: **Bubanko, Vladimir**
**46, rue de Villacoublay**
**F-78140 Velizy (FR)**

(74) Mandataire: **Weinmiller, Jürgen et al,**
**Zeppelinstrasse 63**
**D-8000 München 80 (DE)**

Courier Press, Leamington Spa, England.

Fiche de connecteur fibre à fibre avec élément de raccordement à un câble optique

L'invention concerne une fiche de connecteur fibre à fibre avec élément de raccordement à un câble optique.

Dans le domaine des transmissions d'information par ondes guidées optiques, deux applications principales sont habituellement distinguées:

— les transmissions optiques longue distance avec les télécommunications,

— les transmissions optiques courte distance avec les transmissions de données à bord des avions et navires ou dans les installations industrielles.

La première application intéresse des câbles optiques où chaque conducteur ou fibre optique transporte une information différente de celle des autres fibres. La connexion doit être réalisée sous la forme fibre à fibre et un connecteur multicontact doit assurer le raccordement des fibres individuellement les unes par rapport aux autres.

La seconde application intéresse des câbles optiques où chaque conducteur est constitué de plusieurs fibres. A l'intérieur d'un conducteur, chaque fibre transporte la même information que ses voisines. La connexion peut intervenir sous une forme globale, conducteur à conducteur, par l'intermédiaire d'un mélangeur optique constitué habituellement d'un cylindre de verre à deux indices dont la section de coeur recouvre l'empilement hexagonal constitué par les fibres du câble. Il en résulte une perte de connexion d'autant plus grande que le coefficient d'empilage est plus faible. Ce coefficient est le rapport entre la somme des aires des coeurs des fibres et l'aire de la section du coeur du mélangeur. Cette perte est généralement de l'order de 50% c'est-à-dire 3 dB et s'ajoute à celle qui résulte des tolérances mécaniques de réalisation et d'accouplement des fiches du connecteur. Une connexion fibre à fibre est donc là aussi préférable.

La présente invention concerne donc les deux applications principales rappelées ci-dessus.

Dans la réalisation des connecteurs fibre à fibre la difficulté provient de la nécessité d'obtenir un alignement suffisamment précis des fibres si l'on veut obtenir des pertes de couplage aussi faibles que possibles, par exemple inférieures à 1 dB. Si les fibres ont par exemple un coeur d'un diamètre de 100 microns entouré par une gaîne d'indice plus faible, avec une différence d'indice comprise entre $5.10^{-3}$ et $10^{-1}$, ces dispositifs doivent alors permettre le positionnement des fibres dans les conditions suivantes: la distance entre les extrémités en regard des fibres doit être inférieure à 20 microns; l'excentrement relatif doit être inférieur à 4 microns; l'inclinaison relative doit être inférieure à 1 degré. Dans le cas où l'on réalise une adaptation de l'indice du milieu séparant les deux fibres, ces tolérances deviennent plus larges: 100 microns pour la distance et 10 microns pour l'excentrement, l'inclinaison étant inchangée. Compte tenu du faible diamètre des fibres, ces tolérances sont difficiles à respecter.

C'est pourquoi il peut être avantageux de maintenir chaque fibre dans l'un des sillons "de maintien" formés par les surfaces latérales en regard de tiges "de maintien" cylindriques de révolution appuyées latéralement les unes contre les autres et formant une nappe plane appuyée verticalement sur une surface de base plane. De telles tiges de maintien peuvent en effet être usinées à faible coût avec une grande précision dans un acier dur. Elles sont maintenues parallèlement les unes aux autres et en contact deux à deux par leurs surfaces latérales grâce à des moyens de serrage appropriés. Les fibres sont mises dans les positions convenables par l'intermédiaire de moyens de guidage qui guident l'ensemble de maintien constitué par la nappe des tiges de maintien.

Ce guidage peut alors se faire avec précision car il agit sur un ensemble beaucoup plus robuste et rigide, et de dimensions transversales beaucoup plus grandes que les fibres. Ces moyens de guidage peuvent être eux mêmes constitués par des tiges cylindriques de révolution en matériau dur et rigide, et s'appuyant latéralement de part et d'autre de l'ensemble de maintien verticalement sur la face de base. Une autre disposition utilisant également des tiges de maintien et de guidage a été par ailleurs décrite dans la demande de premier certificat d'addition française n° 2 316 611, pour "Dispositif de positionnement de fibre" et dans le brevet américain n° 4 050 783 équivalent à cette demande (invention d'André TARDY). Selon cette autre disposition les tiges de maintien sont réparties tout autour d'un axe, l'ensemble de maintien étant entouré par des tiges de guidage, le tout étant entouré par des moyens de serrage.

On appelera ci-après "connecteur" l'ensemble de deux "fiches" complémentaires coopérant l'une avec l'autre pour assurer la connexion de deux câbles chaque fiche étant raccordée à l'extrémité d'un câble. L'ensemble des éléments d'une fiche qui assure le maintien de l'extrémité d'une seule fibre sera appelé "contact". Chaque fiche comporte donc autant de contacts qu'il y a de fibres dans le câble. Ces contacts sont disposés dans un "élément connectant" à l'avant de la fiche, l'arrière de celle-ci comportant un élément de raccordement permettant de recevoir et de fixer le câble optique contenant la plus grande partie de la longueur des fibres. La présente invention s'applique plus particulièrement au cas ou les contacts sont formés par les extrémités avant des sillons de maintien dans lesquels les fibres à connecter peuvent être insérées.

Les fiches de connecteur fibre à fibre connues présentent souvent des inconvénients qui apparaissent lorsque l'on veut raccorder un câble à une fiche. Il est en effet alors difficile et long d'insérer l'ensemble des extrémités avant des fibres dans l'ensemble des extrémités arrière des sillons de maintien. Ceci tient au fait que les fibres présentent généralement dans le câble optique une disposition, par exemple un empilement hexagonal dans un câble rond, qui est différente de la disposition des sillons de maintien dans l'élément connectant, cette dernière disposition, par exemple une nappe plane de sillons parallèles équidistants étant choisie pour faciliter la réalisation et l'utilisation de cet élément connectant. Cette difficulté de raccordement croît évidemment avec le nombre de fibres du câble optique que la fiche permet de connecter. Elle peut empêcher de choisir ce nombre aussi grand qu'il serait souhaitable.

Le document DE—B—25 18 319 décrit une liaison entre deux câbles à fibres. Cette liaison est composée de trois pièces, à savoir un élément de raccordement avec chacun des câbles et un élément connectant commun au centre. La liaison doit être effectuée en chantier par mise en position alignée des extrémités des fibres. Ce travail est très délicat et constitue une source fréquente d'une baisse de qualité de transmission du câble.

Le document FE—A—2.282.650 décrit un dispositif similaire comportant un seul bloc rainuré. Par conséquent, la liaison s'effectue également en chantier avec les mêmes conséquences fâcheuses que dans le cas précédent.

La présente invention a pour but la réalisation d'une fiche de connecteur fibre à fibre avec élément de raccordement à un câble optique permettant un raccordement plus facile de la fiche à un câble optique multifibre, et permettant par conséquent, si nécessaire, d'augmenter le nombre de contacts de la fiche.

Ce but est atteint par une fiche de connecteur fibre à fibre avec élément de raccordement à un câble optique destinée à être amenée par une face avant en contact avec la face avant correspondante d'une fiche complémentaire, de façon à assurer ladite connexion fibre à fibre, comportant

— un élément connectant comportant des sillons de maintien s'étendant parallèlement entre eux chacun d'une partie arrière jusqu'à une face avant de cet élément et aptes à recevoir et à maintenir chacun l'une des fibres à connecter, cette face avant constituant ladite face avant de la fiche,

— des moyens de guidage de connexion prévus sur l'élément connectant pour le guider par rapport à l'élément connectant correspondant de la fiche complémentaire,

— un élément de raccordement séparable s'étendant dans le prolongement de la partie arrière de l'élément connectant et muni de moyens de fixation pour recevoir et fixer à l'arrière de la fiche un câble optique comportant une pluralité de fibres optiques à connecter qui sont disposées sous forme d'un empilement dans le câble et qui sont dénudées en avant de ces moyens de fixation,

— des moyens de guidage de raccordement pour écarter ou rapprocher l'élément de raccordement de l'élément connectant,

— et des moyens pour fixer l'élément de raccordement à l'arrière de l'élément connectant,

caractérisée par le fait que ledit élément de raccordement comporte un répartiteur de fibres formant au moins un canal de répartition qui s'étend de l'arrière à l'avant de ce répartiteur, ce canal présentant à sa partie arrière une section de forme propre à recevoir au moins une partie de l'empilement des fibres du câble optique, et la forme de la section de ce canal se modifiant progressivement vers l'avant jusqu'à devenir sensiblement conforme à celle des sillons de maintien de manière à assurer, par simple introduction du câble dénudé à l'arrière de l'élément de raccordement, l'amenée automatique des fibres faisant saillie de ce câble depuis la disposition initiale en forme d'empilement qu'elles occupent au moment de leur introduction à l'arrière de cet élément de raccordement jusqu'à une disposition finale désirée qui est conforme à celle de sillons de maintien dans lesquels elles doivent ensuite être insérées et qu'elles doivent occuper au moment de leur arrivée sur la partie avant de l'élément de raccordement.

A l'aide des figures schématiques ci-jointes, on va décrire ci-après, à titre non limitatif, comment l'invention peut être mise en oeuvre. Lorsqu'un même élément est représenté sur plusieurs figures, il y est désigné par le même signe de référence. Sur certaines de ces figures certains moyens d'appui et de serrage sont représentés par de simples flèches qui portent les mêmes signes de référence que sur les autres figures où ces mêmes moyens sont représentés moins schématiquement.

La figure 1 représente une vue de dessus d'un connecteur comportant deux fiches complémentaires selon l'invention, les flèches portées sur cette figure représentant des directions de déplacement, l'une des deux fiches étant représentée avec son élément de raccordement séparé de son élément connectant.

La figure 2 représente une vue en perspective d'une fiche selon l'invention.

La figure 3 représente une vue schématique de l'élément connectant de cette fiche, certains points de contact étant représentés par la pointe d'un triangle dessiné en noir plein.

La figure 4 représente une vue partielle à échelle agrandie de cet élément connectant en coupe par un plan vertical transversal passant par la zone d'appui des tiges de maintien.

La figure 5 représente une vue partielle à une échelle agrandie de cet élément connectant en coupe par un plan vertical transversal passant par les coussins de blocage des fibres dans les sillons de maintien.

La figure 6 représente une vue partielle de cet élément connectant en perspective éclatée.

La figure 7 représente une vue partielle de cet élément connectant en perspective montrant la disposition générale des ses éléments principaux.

La figure 8 représente une vue de devant partiellement coupée de cet élément connectant, cette figure étant mois schématique que la figure 3.

La figure 9 représente une vue à une échelle agrandie de cet élément connectant en coupe par le plan vertical longitudinal IX—IX de la figure 8.

La figure 10 représente une vue de dessus de cet élément connectant dont la plaque d'appui a été enlevée, cet élément connectant coopérant avec un élément connectant complémentaire, cette vue montrant également une partie de l'élément de raccordement.

La figure 11 représente une vue en perspective d'ensemble de la même fiche dont l'élément de raccordement a été écarté de l'élément connectant.

La figure 12 représente une vue de cet élément de raccordement en coupe par un plan vertical longitudinal passant par les moyens de guidage de raccordement.

La figure 13 représente une vue de cet élément de raccordement en coupe par un plan vertical longitudinal passant par les canaux de répartition d'un répartiteur de fibres.

Les figures 14 (A à F) représentent schématiquement à une échelle agrandie des sections droites successives d'un canal de répartition, en partant de l'arrière du même répartiteur.

La figure 15 représente une vue de l'arrière de l'élément connectant en coupe par un plan vertical longitudinal et de l'avant de l'élément de raccordement en vue de côté, montrant l'introduction des fibres optiques.

La figure 16 représente une vue de face d'une réglette de répartition située entre les éléments connectant et de raccordement et portée par les moyens de guidage de raccordement.

La figure 17 représente une vue en perspective d'un intervalle créé temporairement entre l'élément connectant et l'élément de raccordement, cette vue montrant la position de la réglette de répartition.

La figure 18 représente une vue partielle agrandie de la même réglette de répartition.

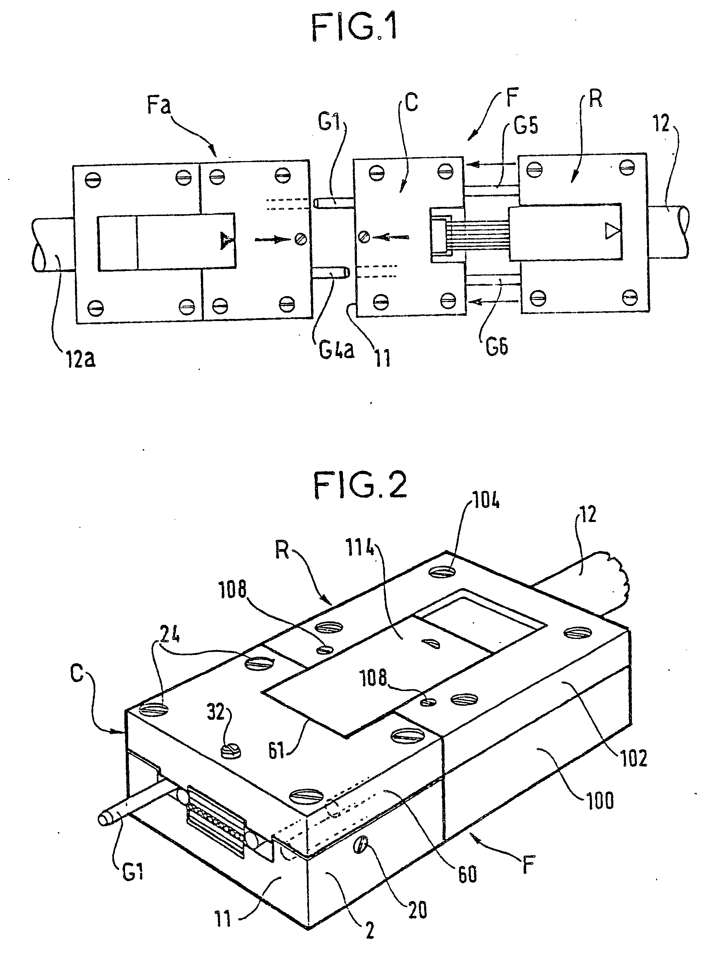

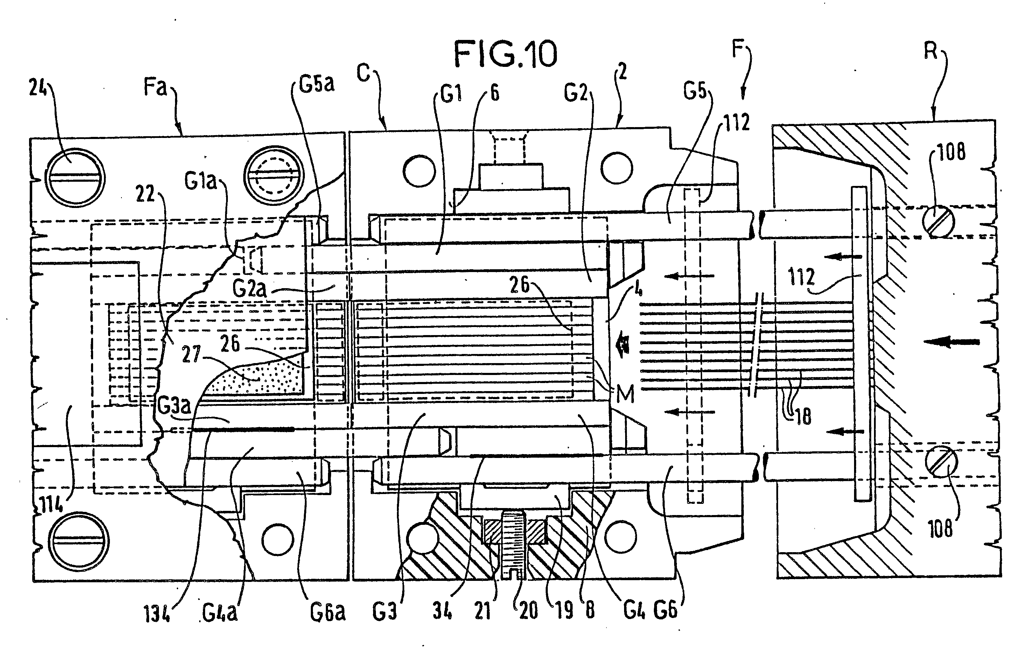

Le connecteur représenté sur la figure 1 en vue de dessus comporte deux fiches complémentaires F et Fa identiques l'une à l'autre sauf deux différences qui seront indiquées plus loin. Chacune de ces fiches est raccordée par l'arrière à l'extrémité d'un câble optique rond 12 et 12a respectivement comportant un empilement de fibres optiques. La section de cet empilement est approximativement circulaire ou hexagonale. Les faces avant telles que 11 de ces fiches se font face. La connexion optique fibre à fibre entre les deux câbles est réalisée lorsque ces deux faces avant viennent au contact, des contacts optiques portés par chacune de ces faces venant alors en coïncidence avec ceux portés par l'autre, ceci grâce à des moyens de guidage de connexion constitués notamment par des tiges G1 et G4a. De manière générale une pièce de la fiche Fa correspondant à une pièce de la fiche F porte la même référence que cette pièce de la fiche F, avec seulement la lettre "a" en plus (voir figure 10).

On va essentiellement décrire ci-après la fiche F, étant entendu qu'en ce qui concerne la fiche complémentaire Fa on indiquera seulement ses différences par rapport à la fiche F. Celle-ci est essentiellement constituée de deux éléments séparables: un élément connectant C à l'avant de la fiche et un élément de raccordement R à l'arrière. L'élément connectant, dans lequel la plus grande précision est requise, peut ainsi être monté en atelier sans les sujétions d'un chantier. De même le câble peut être raccordé à l'élément de raccordement en dehors du lieu ou la connexion optique devra être réalisée. Ceci peut par exemple faciliter un traitement optique des extrémités des fibres, et faciliter aussi le raccordement du câble à l'élément de raccordement.

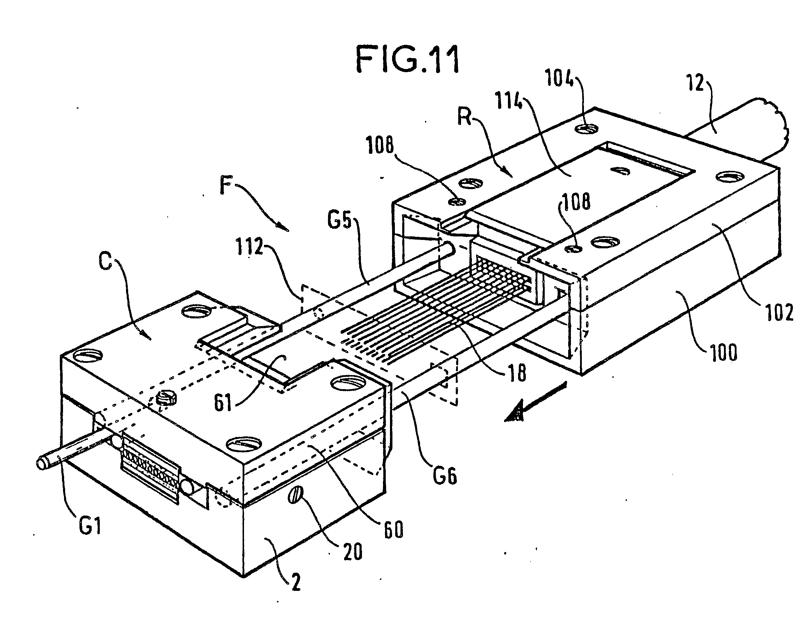

L'élément connectant et l'élément de raccordement sont destinés à être réunis après avoir été mutuellement guidés par des moyens de guidage de raccordement constitués par deux tiges G5 et G6. Ces tiges permettant de rapprocher ces deux éléments lors de l'opération de raccordement, (Figures 1 et 11) en assurant leur guidage relatif et de fixer ensuite ces deux éléments l'un à l'autre (Figure 2).

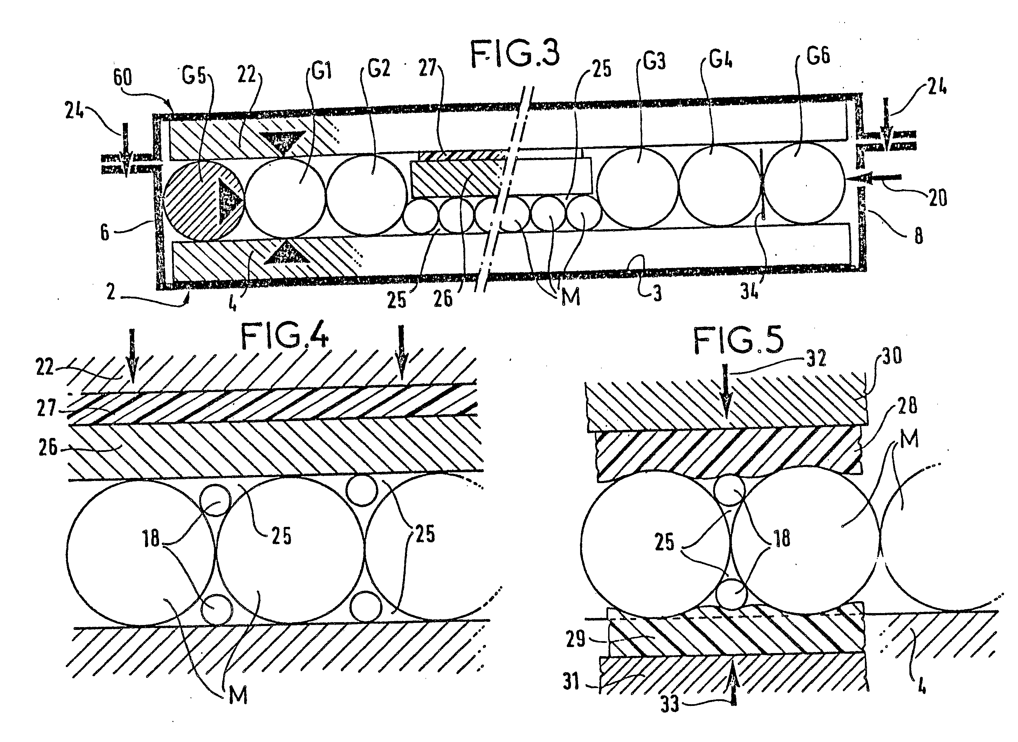

On va maintenant décrire l'élément connectant C à l'aide des figures 3 à 10.

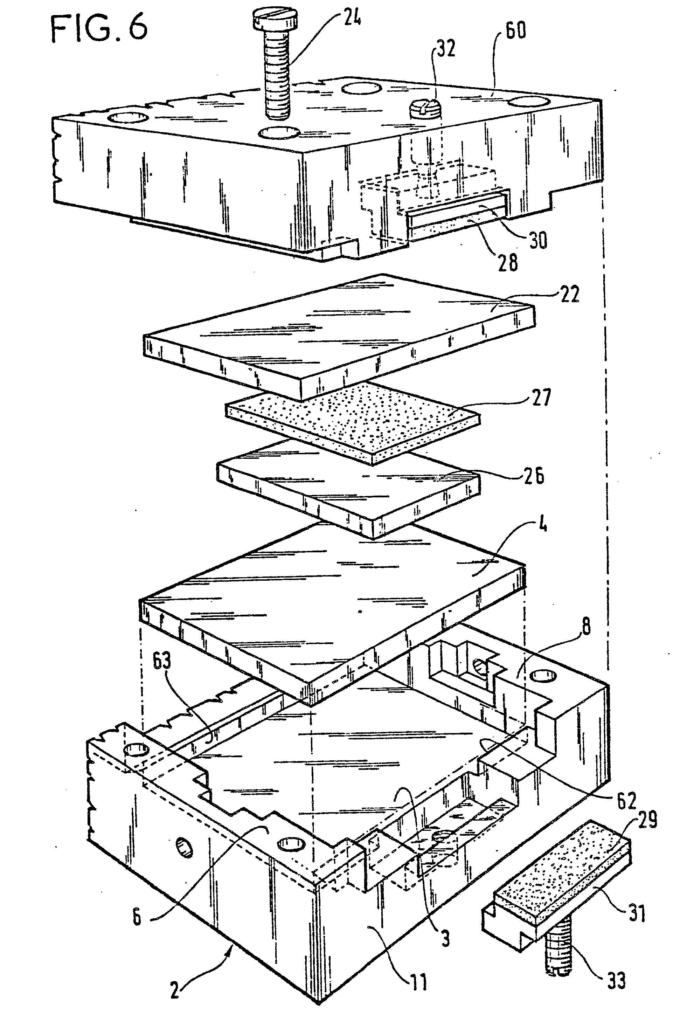

Il a la forme générale d'un boîtier constitué par une embase 2 faite par exemple d'une polyamide moulée, et dont la section est en forme de U. La partie intermédiaire 3 du U est plus longue que les branches verticales 6 et 8 qui constituent des épaulements. Elle comporte un logement occupé par une plaque de base 4 constituée d'un métal dur et rigide et usinée avec précision de manière que sa face supérieure constitue un plan de référence par exemple horizontal, en saillie au-dessus de la partie intermédiaire 3. Cette plaque de base est positionnée latéralement par des épaulements 6 et 8, à l'avant de l'embase 2, elle est positionnée par des épaulements 62 de part et d'autre de la partie centrale de la face avant 11, et en arrière par l'épaulement 63 (figure 6). Sur cette plaque sont disposés des ensembles de maintien et de guidage constitués par des tiges cylindriques de révolution usinées avec précision dans un métal dur et rigide. Ces tiges sont parallèles entre elles, disposées longitudinalement et serrées latéralement les unes contres les autres. On rencontre successivement les éléments suivants à partir de l'épaulement 6, étant entendu que des éléments correspondants leur font face dans la fiche complémentaire Fa; deux éléments se faisant face étant identiques sauf indication contraire:

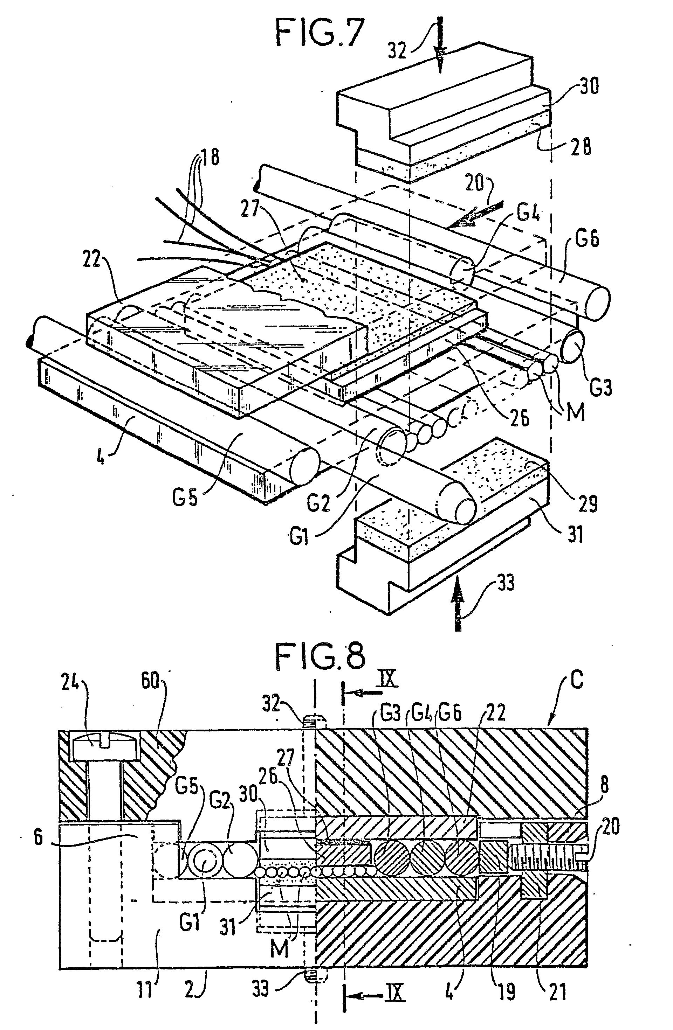

— une tige de référence principale G5 qui s'étend au voisinage de la face avant 11 jusque loin au-delà du bord arrière de la plaque de base 4 et de l'embase 2 de manière à constituer un moyen de guidage de raccordement R (figures 7 et 10). Cette tige de référence principale définit par une de ses génératrices l'appui et la position latérale des autres tiges.

— une tige de guidage principale mâle G1 en forte saillie par rapport à la face avant 11 de l'embase 2, par exemple sur 10 mm, avec son extrémité avant chanfreinée, l'élément qui lui fait face dans la fiche complémentaire Fa étant une tige de guidage principale femelle G1a en retrait de par exemple 11 mm,

— une première tige de butée G2 avec une extrémité avant plane en légère saillie par rapport à la face avant 11, par exemple sur 5 microns, le plan de la face avant de cette tige étant perpendiculaire à la longueur de celle-ci,

— un ensemble de tiges de maintien M. Le nombre de ces tiges est égal à la moitié de celui des fibres à connecter augmentée de un. Les faces avant de ces tiges sont sensiblement dans le plan de la face avant 11.

— une deuxième tige de butée G3 identique à la première et placée de la même manière par rapport à la face avant 11.

— une tige de guidage auxiliaire femelle G4 dont la face avant est en retrait par rapport à la face avant 11, de manière à ménager un intervalle de guidage dont la profondeur est légèrement supérieure à la longueur en saillie de la tige de guidage principale G1, cet intervalle étant prévu pour recevoir la partie en saillie d'une tige de guidage auxiliaire mâle G4a faisant partie de l'élément connectant de la fiche complémentaire Fa. Lorsqu'on réalise la connexion des deux fiches, les tiges de guidage mâles G1 et G4a s'engagent respectivement dans les intervalles ménagés en avant des tiges femelles telles que G1a et G4 qui leur font face.

— une cale d'écartement 34 (figures 3 et 10), constituée par une plaque d'acier mince à faces parallèles. Cette cale, et une cale correspondante dans la fiche complémentaire Fa, sont rendues nécessaires par le fait que les diamètres des tiges précédentes, et de celles qui leur correspondent dans la fiche complémentaires Fa, ne peuvent pas être prédéterminés avec une précision parfaite. Il en résulte une indétermination sur la largeur totale de l'ensemble constitué par ces tiges, et un risque que le tige de guidage mâle auxiliaire G4a ne puisse pas s'engager correctement dans l'intervalle de guidage de l'avant de la tige G4. C'est pourquoi la cale d'écartement 134 de la fiche complémentaire Fa présente une épaisseur au moins égale à la différence entre les valeurs maximale et minimale possibles de cette largeur totale, et la cale 34 présente une épaisseur double de cette différence.

— une tige de référence auxiliaire G6, qui se prolonge vers l'arrière comme la tige de référence principale G5 de manière à permettre le guidage de l'élément de raccordement R.

L'ensemble de ces éléments situés sur la plaque de base 4 est poussé contre l'épaulement 6 par une vis de serrage latéral 20 par l'intermédiaire d'un étrier 19. Cette vis coopère avec un écrou 21 logé dans l'épaulement 8 de l'embase 2. La présence de la tige de référence auxiliaire G6 permet de réaliser l'embase 2 de manière symétrique par rapport à un plan vertical longitudinal médian, et donc de manière identique pour la fiche F et la fiche complémentaire Fa.

Les tiges précédemment mentionnées sont toutes constituées d'un acier dur, et usinées avec précision en forme de cylindre de révolution. On sait qu'un tel usinage est possible à peu de frais malgré la grande précision qu'il est possible d'atteindre.

Les tiges de maintien ont un diamètre qui peut être choisi égal à 0,55 mm par exemple si les fibres ont un diamètre de 125 microns c'est-à-dire supérieur à quatre fois le diamètre des fibres. Ce choix est fait de manière que les fibres 18, qui sont disposées dans les sillons "de maintien" tels que 25 formés entre ces tiges et ouverts vers le haut et le bas, ne débordent pas au-dessus de ces sillons, et restent en-deça des plans horizontaux tangents aux sommets de ces tiges, ceci pour éviter tout risque de contact avec les plaques maintenant les tiges. L'ensemble de ces tiges de maintien constitue un ensemble "de maintien", les autres tiges constituant un ensemble "de guidage".

Les tiges de guidage et de butée ont un diamètre de préférence plus grand, avantageusement compris entre 1,5 et 3 fois celui des tiges de maintien, de manière à être plus rigides. Un diamètre excessif de ces tiges tendrait à faire monter les tiges de butée sur les tiges de maintien sous la poussée de la vis de serrage latéral 20.

Cette dernière assure le serrage de toutes ces tiges (y compris la cale 34) les unes contre les autres et contre la tige de référence G5 elle même serrée contre l'épaulement 6. Il en résulte que ces tiges sont toutes parallèles entre elles et à cet appui, c'est-à-dire perpendiculaires à la face avant 11, à condition qu'elles soient maintenues au contact de la face de base 4 par des moyens d'appui convenables. Ces moyens sont constitués pour l'ensemble de guidage par une plaque d'appui 22 constituée d'un matériau moins dur que les tiges et la plaque de base de manière d'une part à éviter toute déformation de ces tiges ou de cette plaque, et d'autre part à permettre l'introduction de la tige de guidage mâle de la fiche complémentaire. Sa largeur est presque égale à la distance entre les épaulements 6 et 8 de manière qu'elle soit positionnée par ces épaulements. Elle est munie, dans sa partie médiane au-dessus de l'ensemble de maintien d'une saillie formée par une plaquette d'appui 26 fixée à sa face inférieure par l'intermédiaire d'une semelle en caoutchouc 27, dont l'écrasement permet d'exercer une force d'appui uniforme sur les tiges de maintien. Un couvercle 60 est fixé à l'embase 2 par des vis 24 et appuie la plaque d'appui 22 vers le bas (figures 6, 7 et 8).

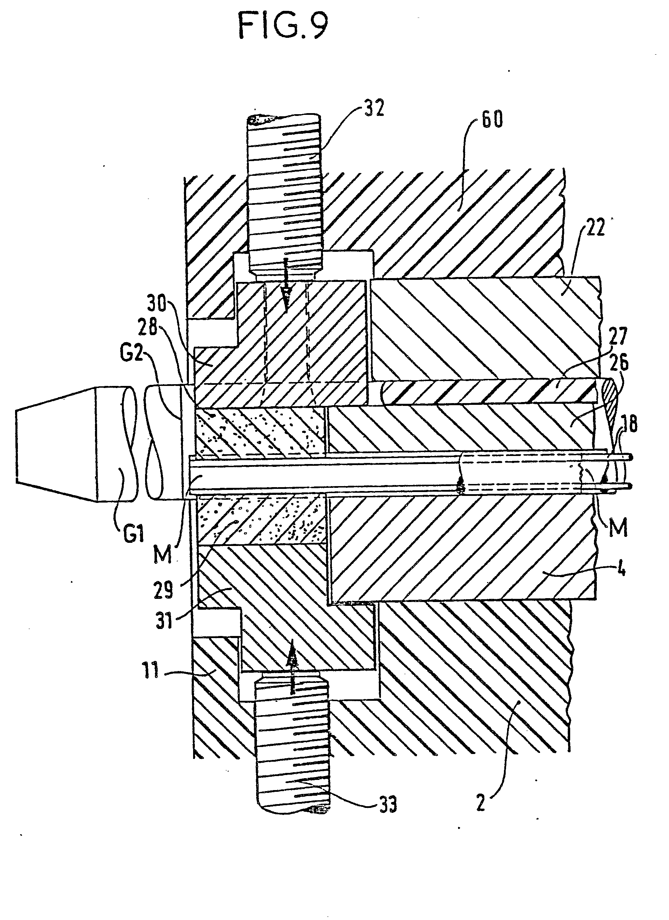

Les parties médianes de l'avant du couvercle 60 et de l'embase 2 comportent chacune un logement (voir figures 6 et 9) pour recevoir respectivement un patin supérieur constitué d'un coussin élastique 28 fixé à un support métallique 30, et un patin inférieur constitué d'un coussin élastique 29 fixé à un support 31. Ces coussins sont appliqués contre les parties avant des faces respectivement supérieure et inférieure de l'ensemble de maintien grâce à des vis 32 et 33, de manière à pénétrer dans les sillons de maintien formés dans ces faces et à y bloquer les fibres optiques 18. Les supports 30 et 31 comportent à leur partie arrière des saillies vers le haut et le bas coopérant avec les logements ménagés dans le couvercle 60 et l'embase 2, de manière à éviter que les patins ne puissent s'échapper vers l'avant. Les plaques, d'appui 22 et de base 4, constituent d'autre part, à leur extrémité avant, des butées verticales pour les supports 30 et 31 de manière à éviter que l'on exerce sur les coussins 30 et 31 un effort qui risquerait de faire fléchir les extrémités avant des tiges de maintien M.

Il apparaît de ce qui précède que les sillons de maintien sont parallèles entre eux, et aux tiges de référence G5 et G6, et qu'ils forment deux nappes planes horizontales superposées, chacun des sillons de la nappe supérieure étant au-dessus d'un sillon de la nappe inférieure, la distance entre deux sillons d'une même nappe étant toujours la même. La présente invention permet de faciliter l'introduction des fibres optiques d'un cable par exemple rond dans ces sillons après serrage des vis telles que 20 et 24 mais avant serrage des vis telles que 32 et 33, ces dernières n'étant serrées que lorsqu'on a ajusté la position longitudinale des fibres dans les sillons.

On va décrire maintenant l'élément de raccordement R qui est guidé, par rapport à l'élément connectant C, par les tiges de référence G5 et G6.

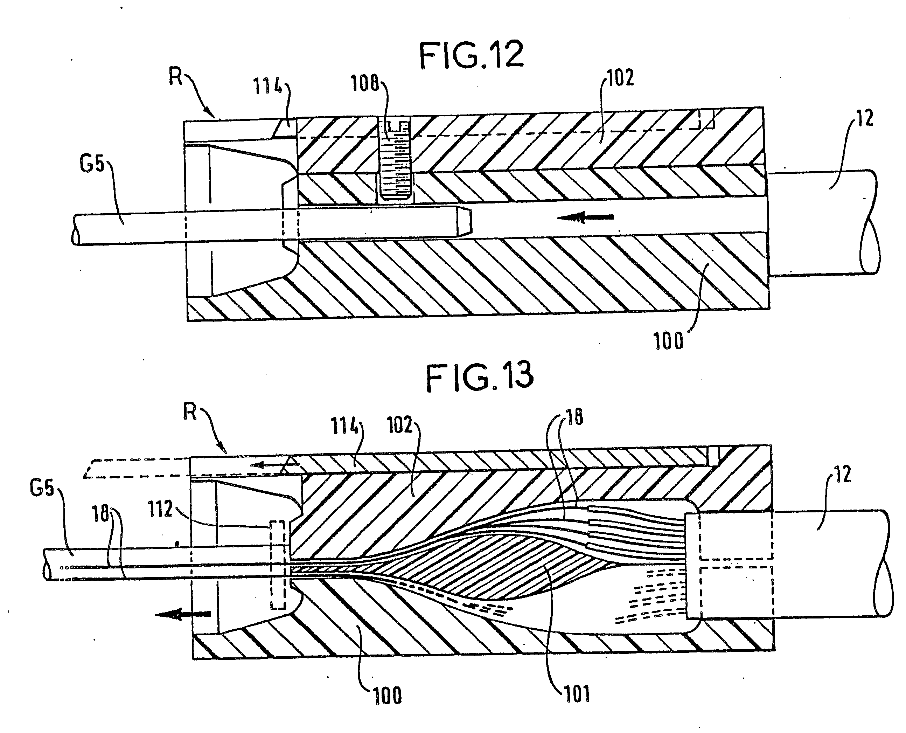

Il présente lui aussi la forme d'un boîtier, avec une embase 100 et un couvercle 102 fixé à l'embase par des vis 104 (voir figures 11 et 12). L'embase comporte deux alésages de guidage longitudinaux pour les tiges G5 et G6 et deux vis de blocage 108 traversant le couvercle pour permettre de bloquer l'élément de raccordement sur ces tiges lorsque les opérations d'introduction et positionnement des fibres optiques dans l'élément connectant sont terminées.

Les bords arrière de l'embase 100 et de couvercle 102 comportent d'autre part des logements en regard pour recevoir et bloquer solidement le câble optique 12 dans l'élément de raccordement.

Entre l'embase 100 et le couvercle 102 est disposé une partie intermédiaire 101 constituant un guide répartiteur pour les fibres, les faces inférieures du couvercle et la face supérieure de l'embase comportant des évidements de manière à former avec ce guide deux canaux de répartition symétriques par rapport au plan horizontal défini par les axes des tiges de maintien M.

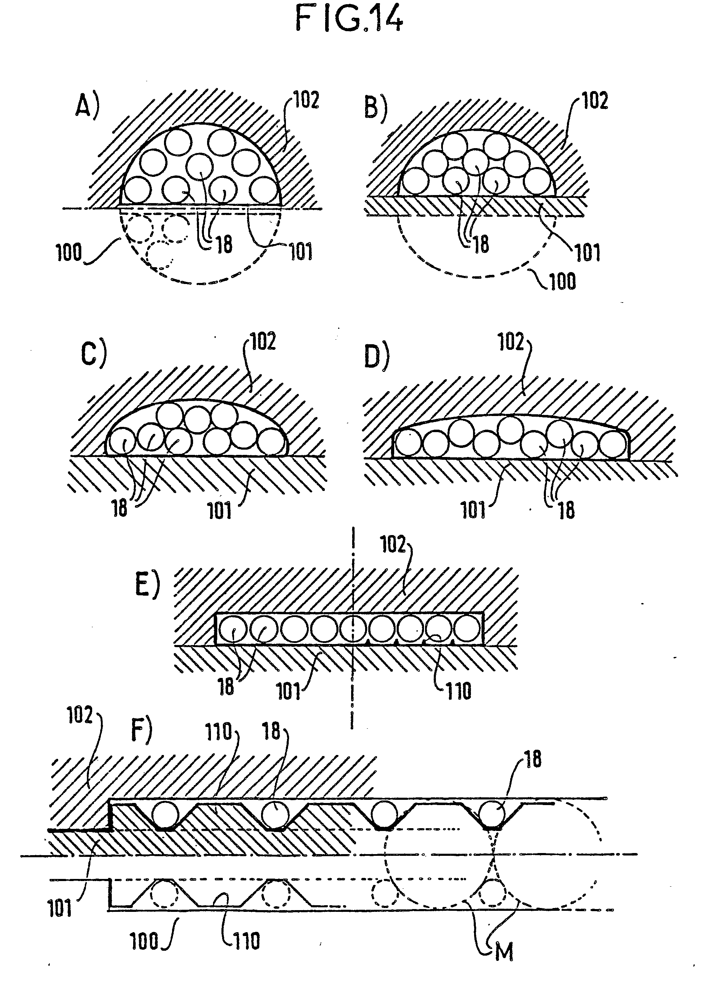

Le bord arrière du guide 101 présente la forme d'une lame de couteau horizontale transversale séparant diamétralement en deux moitiés l'empilement des fibres sortant du câble rond 12 dans l'élément de raccordement, l'épaisseur de cette lame croissant vers l'avant de cet élément de manière à écarter ces deux moitiés. Seul le canal de répartition supérieur est représenté schématiquement par des coupes successives sur la figure 14 (de A à F). La section de ce canal, en coupe par des plans verticaux transversaux, présente une forme qui évolue de l'arrière vers l'avant de l'élément du raccordement. Cette forme est d'abord celle d'un demi cercle (figure 14A) puis l'arc s'aplatit progressivement (figure 14B, C et D) jusqu'à ce que la section présente la forme d'un rectangle horizontal dont la hauteur n'est que très légèrement supérieure au diamètre d'une fibre, ceci de manière à disposer ces fibres sensiblement jointives en une nappe plane (figure 14E, partie gauche). Des séparateurs tels que 110 commencent alors à s'élever entre les fibres à partir du guide 101 de manière à les séparer et à disposer chacune d'entre elles dans un canal de répartition individuel. (Figure 14E partie droite.) Les canaux individuels s'incurvent alors, et le rectangle s'allonge sans changer de hauteur tandis que les séparateurs s'élargissent jusqu'à ce que les distances entre fibres atteignent la distance entre deux sillons de maintien voisins dans une même nappe. Les canaux individuels s'incurvent progressivement de manière à redevenir horizontaux et parallèles (figures 13 et 14F), et à être sensiblement alignés sur les sillons de maintien lorsque les tiges G5 et G6 sont engagées dans l'élément de raccordement R. La distance entre les deux nappes de canaux de répartition peut cependant avantageusement être légèrement supérieure à celle entre les deux nappes des sillons de maintien.

L'alignement des canaux individuels avec les sillons de maintien ne peut en général pas, en raison des longueurs des fibres débordant la face avant de l'élément du raccordement assurer à lui seul l'engagement des extrémités des fibres optiques dans l'arrière des sillons de maintien lorsqu'on rapproche l'élément de raccordement de l'élément connectant. C'est pourquoi on prévoit d'une part une disposition convenable des pièces à l'arrière des sillons de maintien, dans l'élément connectant C et on utilise d'autre part une réglette de répartition 112 qui peut coulisser sur les tiges G5 et G6 et qui guide les fibres 18 vers les sillons de maintien 25.

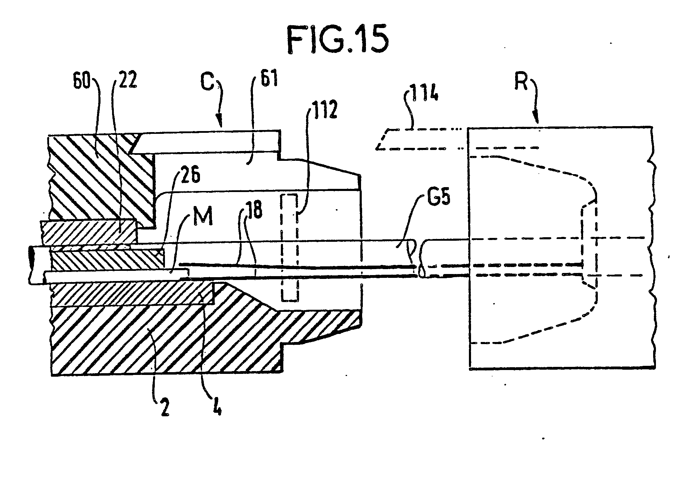

A partir de l'arrière de l'élément connectant C on rencontre d'abord (figure 15) le bord arrière de la plaque de base 4, puis les extrémités arrière des tiges de maintien M posées sur cette plaque, puis le bord arrière de la plaquette d'appui 26 posée sur ces tiges.

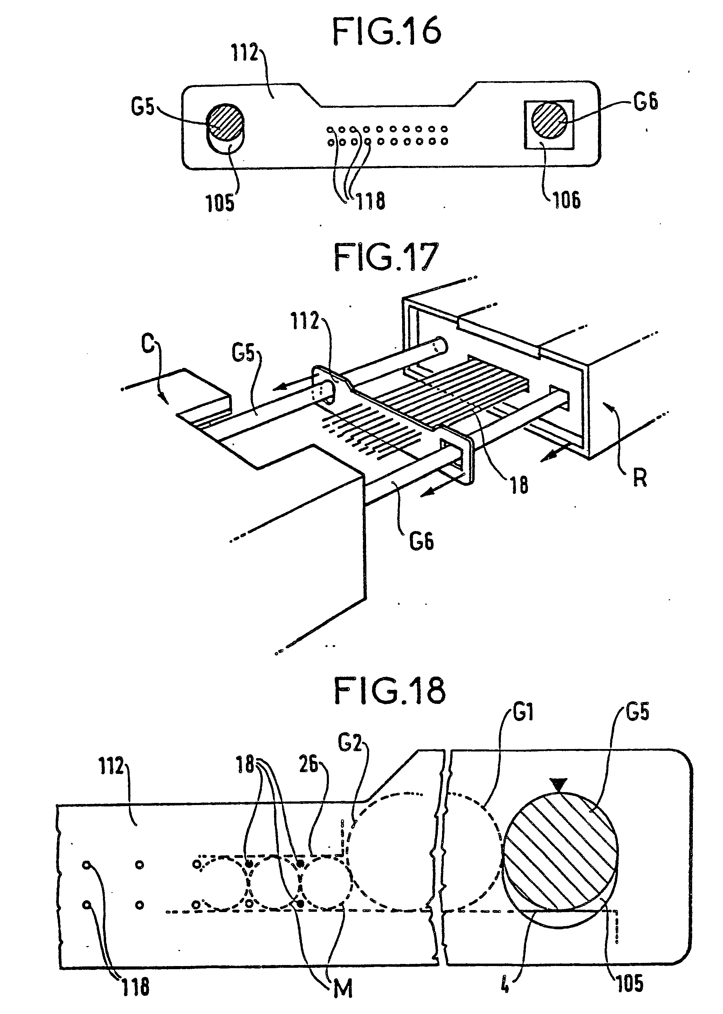

La réglette 112 (voir figure 16) présente deux ouvertures 105 et 106 pour le passage des tiges G5 et G6, avec un jeu seulement vertical dans l'ouverture 105 pour la tige principale G5, et un jeu vertical et horizontal dans l'ouverture 106 pour la tige auxiliaire G6. Elle présente d'autre part deux lignes d'ouvertures 118 disposées dans l'alignement des parties avant des canaux de répartition individuels. Ces ouvertures sont de préférence coniques c'est-à-dire qu'elles sont plus grandes sur la face arrière de la réglette que sur sa face avant de manière à faciliter l'engagement des fibres qui sortent des canaux individuels dans ces ouvertures.

Pour engager les fibres optiques 18 dans les sillons de maintien lorsqu'on rapproche l'élément de raccordement R de l'élément connectant, on commence par soulever légèrement la réglette 112 de manière à placer les extrémités des fibres de la nappe inférieure au-dessus de la plaque de base 4 lorsqu'elles approchent du bord arrière de cette plaque. Lorsqu'elles ont dépassé ce bord, la réglette est abaissée jusqu'à une position moyenne qui laisse les extrémités des fibres de la nappe inférieure reposer sur la plaque de base 4.

Ces extrémités s'engagent ensuite dans les sillons de maintien de la nappe inférieure. Le risque de rencontre entre les faces arrière des tiges de maintien et les extrémités des fibres de la nappe supérieure est évité à ce moment par le fait que ces fibres sont disposées un peu plus haut que les sillons de maintien correspondants. La réglette 112 est ensuite mise dans une position basse de manière à appliquer les extrémités des fibres de l nappe supérieure dans les sillons de maintien qui leur sont destinés, et à éviter le risque de rencontre entre ces extrémités et le bord arrière de la plaquette 26.

Lorsque ce bord est franchi il ne reste plus qu'à ajuster définitivement la position longitudinale des fibres, en les serrant par les patins de blocage dans leurs sillons de maintien.

Le couvercle 60 de l'élément connectant comporte une ouverture 61 au-dessus de l'arrière de l'ensemble de maintien, de manière à faciliter l'engagement des fibres. Lorsque l'élément de raccordement et l'élément connectant sont définitivement fixés l'un à l'autre, cette ouverture est fermée par un obturateur coulissant 114 provenant de l'élément de raccordement. L'étanchéité des deux pièces coopérant est améliorée en prévoyant un emboîtement de l'élément connectant dans l'élément de raccordement ou vice-versa.

Il est clair que la forme du ou des canaux de répartition des fibres peut être adaptée à diverses formes d'éléments connectants, qui peuvent présenter plus ou moins de deux nappes planes de sillons, ou une nappe cylindrique de sillons, et à diverses formes de câbles, ronds ou plats. De plus la réglette de répartition des fibres peut présenter tout aussi bien la forme d'un ou de deux peignes, avec des dents verticales entre les fibres.

**Revendications**

1. Fiche de connecteur fibre à fibre (F) avec élément de raccordement à un câble optique destinée à être amenée par une face avant en contact avec la face avant correspondante d'une fiche complémentaire (Fa), de façon à assurer ladite connexion fibre à fibre, comportant:

— un élément connectant (C) comportant des sillons de maintien (25) s'étendant parallèlement entre eux chacun d'une partie arrière jusqu'à une face avant (11) de cet élément et aptes à recevoir et à maintenir chacun l'une des fibres (18) à connecter, cette face avant (11) constituant ladite face avant de la fiche,

— des moyens de guidage de connexion (G1) prévus sur l'élément connectant pour le guider par rapport à l'élément connectant correspondant de la fiche complémentaire,

— un élément de raccordement séparable (R) s'étendant dans le prolongement de la partie arrière de l'élément connectant et muni de moyens de fixation pour recevoir et fixer à l'arrière de la fiche un câble optique (12) comportant une pluralité de fibres optiques à connecter qui sont disposées sous forme d'un empilement dans le câble et qui sont dénudées en avant de ces moyens de fixation,

— des moyens de guidage (G5, G6) de raccordement pour écarter ou rapprocher l'élément de raccordement (R) de l'élément connectant (C),

— et des moyens (108) pour fixer l'élément de raccordement à l'arrière de l'élément connectant,

caractérisée par le fait que ledit élément de raccordement (R) comporte un répartiteur de fibres (100, 101, 102) formant au moins un canal de répartition qui s'étend de l'arrière à l'avant de ce répartiteur, ce canal présentant à sa partie arrière une section de force propre à recevoir au moins une partie de l'empilement des fibres du câble optique (12), et la forme de la section de ce canal se modifiant progressivement vers l'avant jusqu'à devenir sensiblement conforme à celle des sillons de maintien, de manière à assurer, par simple introduction du câble dénudé à l'arrière de l'élément de raccordement, l'amenée automatique des fibres (18) faisant saillie de ce câble depuis la disposition initiale en forme d'empilement qu'elles occupent au moment de leur introduction à l'arrière de cet élément de raccordement jusqu'à une disposition finale désirée qui est conforme à celle des sillons de maintien dans lesquels elles doivent ensuite être insérées et qu'elles doivent occuper au moment de leur arrivée sur lar partie avant de l'élément de raccordement.

2. Fiche selon la revendication 1 dans laquelle les sillons de maintien (25) sont formés par un ensemble de tiges de maintien (M) en métal dur, serrés côte à côte et appuyés sur une plaque de base (4) en métal dur,

— cet ensemble de tiges de maintien étant serré latéralement entre des tiges de guidage (G1 ... G6) en métal dur serrées côte à côte et appuyées sur cette même plaque de base, certaines de ces tiges de guidage étant des tiges de guidage de connexion (G1, G4) disposées en saillie ou en retrait par rapport à la face avant pour guider l'élément connectant par rapport à la fiche complémentaire,

caractérisée par le fait que lesdits moyens de guidage de raccordement sont constitués par certaines autres (G5, G6) desdites tiges de guidage formant saillie à l'arrière de l'élément connectant.

3. Fiche selon la revendication 1 dans laquelle lesdits sillons de maintien forment deux nappes planes superposées, caractérisée par le fait que le répartiteur (100, 101, 102) forme deux canaux de répartition, les sections de ces deux canaux formant, à l'arrière de ce répartiteur, sensiblement deux moitiés d'un même cercle séparées par un diamètre parallèle auxdites nappes planes, la section de chacun de ces canaux évoluant ensuite vers la forme d'un rectangle dont la longueur est sensiblement dans le prolongement d'une de ces nappes planes, cette section étant ensuite progressivement séparée en plusieurs canaux individuels par des séparateurs (110) s'étendant à partir des grands côtés du rectangle, les extrémités avant de ces canaux individuels étant disposées dans l'alignement desdits sillons de maintien.

4. Fiche selon la revendication 1, caractérisée par le fait que le canal de répartition présente une paroi supérieure et une paroi inférieure formées chacune par une partie distincte du répartiteur, ces deux parties (102, 101) étant séparables l'une de l'autre de manière à permettre de poser d'abord les fibres optiques (18) sur une première partie (101) et à les forcer ensuite à se répartir convenablement en venant appuyer la deuxième partie (102) sur la première.

5. Fiche selon la revendication 4, caractérisée par le fait que le répartieur forme deux canaux de répartition superposés et comporte trois parties (100, 101, 102) dont une partie intermédiaire (101) forme une paroi de chacun de ces deux canaux de répartition.

## Patentansprüche

1. Stecker für die Verbindung Faser-Faser (F) mit einem Anschlußelement zum Anschluß an ein optisches Kabel, wobei der Stecker mit einer Stirnseite in Kontakt mit einer entsprechenden Stirnseite eines Komplementärsteckers (Fa) gebracht werden soll, um die Verbindung Faserzu-Faser sicherzustellen,

— mit einem Verbindungselement (C), das Halterillen (25) enthält, welche sich zueinander parallel von einem hinteren Bereich bis zu einer Stirnseite (11) dieses Elements erstrecken und die je eine der zu verbindenden Fasern (18) aufzunehmen und zu halten vermögen, wobei diese Stirnseite (11) die Stirnseite des Steckers bildet,

— mit Verbindungs-Führungsmitteln (G1) am Verbindungselement zu dessen Führung bezüglich des entsprechenden Verbindungselements des Komplementärsteckers,

— mit einem abtrennbaren Anschlußelement (R), das sich in der Verlängerung des hinteren Bereichs des Verbindungselements befindet und Befestigungsmittel zur Aufnahme und rückseitigen Befestigung eines Lichtleitkabels (12) aufweist, wobei das Kabel eine Vielzahl zu verbindender optischer Fasern in gestapelter Anordnung enthält, die vor diesen Befestigungsmitteln freigelegt sind,

— mit Anschluß-Führungsmitteln (G5, G6) zur Führung der gegenseitigen Bewegung des Anschlußelements und des Verbindungselements (C),

— und mit Mitteln (108) zur Befestigung des Anschlußelements hinten am Verbindungselement,

dadurch gekennzeichnet, daß das Anschlußelement (R) einen Faser-Aufteiler (100, 101, 102) enthält, der mindestens einen sich von hinten nach vorne durch den Aufteiler erstreckenden Aufteilungskanal enthält, welcher in seinem hinteren Bereich einen zur Aufnahme mindestens eines Teils des Faserstapels des Lichtleitkabels (12) geeigneten Querschnitt aufweist, der sich nach vorne zunehmend verändert, um schließlich im wesentlichen den Querschnitt der Halterillen anzunehmen, so daß die aus dem Kabel vorstehenden Fasern (18) durch einfache Einführung des freigelegten Kabels von hinten in das Anschlußelement von der ursprünglichen Stapelanordnung, die sie bei ihrer Einführung von hinten in dieses Anschlußelement einnehmen, bis zu einer gewünschten Endanordnung selbsttätig gebracht werden, die sie bei ihrem Eintreffen im vorderen Bereich des Anschlußelements einnehmen müssen, und die der Anordnung der Halterillen gleicht, in die sie dann eingeführt werden sollen.

2. Stecker nach Anspruch 1, in dem die Halterillen (25) von einer Grupper von Haltestäben (M) aus Hartmetall gebildet werden, die Seite an Seite aneinandergedrückt und gegen eine Basisplatte (4) aus Hartmetall gedrückt werden, wobei die Haltestäbe seitlich zwischen Führungsstäben (G1 ... G6) aus Hartmetall eingespannt werden, die ihrerseits seitlich eingespannt und von oben gegen dieselbe Basisplatte gedrückt werden und wobei manche dieser Führungsstäbe als Verbindungsführungsstäbe (G1, G4) ausgebildet sind, die bezüglich der Stirnfläche vorspringen oder zurücktreten und das Verbindungselement bezüglich des komplementären Steckers führen, dadurch gekennzeichnet, daß die Anschluß-Führungsmittel von gewissen anderen der Führungsstäbe (G5, G6) gebildet werden, die nach hinten über das Verbindungselement vorstehen.

3. Stecker nach Anspruch 1, in dem die Halterillen zwei ebene übereinanderliegende Schichten bilden, dadurch gekennzeichnet, daß der Aufteiler (100, 101, 102) zwei Aufteilungskanäle bildet, deren Querschnitte am hinteren Ende des Aufteilers im wesentlichen aus zwei halben Kreisen bestehen, die von einem zu den ebenen Schichten parallelen Durchmesser voneinander getrennt sind, daß der Querschnitt jedes dieser Kanäle dann bis zu einem Rechteck entwickelt, dessen Länge im wesentlichen in der Verlängerung einer dieser ebenen Schichten liegt und dessen Querschnitt dann fortschreitend in mehrere individuelle Kanäle durch Separatoren (110) aufgeteilt wird, die von den großen Seiten des Rechtecks ausgehen, wobei die vorderen Enden dieser individuellen Kanäle in Flucht mit den Halterillen liegen.

4. Stecker nach Anspruch 1, dadurch gekennzeichnet, daß der Aufteilungskanal eine obere Wand und eine untere Wand besitzt, die je aus einem besonderen Teil des Aufteilers bestehen und voneinander trennbar sind (102, 101), so daß zuerst die Lichtleitfaser (18) auf ein erstes Teil (101) aufgelegt werden können und dann durch Auflegen des zweiten Teils (102) auf das erste gezwungen werden, sich geeignet zu verteilen.

5. Stecker nach Anspruch 4, dadurch gekennzeichnet, daß der Aufteiler zwei übereinanderliegende Aufteilungskanäle bildet und aus drei Teilen (100, 101, 102) besteht, deren mittlerer Teil (101) eine Wand für jeden der beiden Aufteilungskanäle bildet.

## Claims

1. A fibre-to-fibre connector plug (F) including a component for joining it to an optical cable, said plug being intended to be brought by one front face in contact with the corresponding front face of a complementary plug (Fa) in order to assure the fibre-to-fibre connection, with
— a connection component (C) with holding grooves (25) which extend parallelly from a rear portion up to a front surface (11) of said component and are each suitable for accommodating and holding one of the fibres (18) which are to be connected, said front surface (11) constituting said front face of the plug,
— connection guide means (G1) provided on the connection component to guide it with respect to the corresponding connection component of a complementary plug,

— a separable joining component (R) extending in the prolongation of the rear part of the connection component and supplied with fixing means to accommodate and fix an optical fibre cable (12) at the rear part of the plug, in which the fibres which are to be connected together are disposed in a bundle configuration and are bared ahead of the fixing means,
— guiding means (G5, G6) for separating or approaching the joining component and the connection component (C),
— and means (108) for fixing the joining component to the rear of the connection component,
characterized in that said joining component (R) includes a fibre distributor (100, 101, 102) which forms at least one distribution passage which extends from the rear to the front of said distributor, the rear portion of the passage having a cross-section which is suitably shaped to accommodate at least part of the bundle of the fibres of an optical fibre cable (12), the cross-section of said passage changing shape progressively towards the front until it becomes substantially identical to the cross-section of the holding grooves, so that the protruding fibres (18) are forced to change automatically from the original bundle form in which they are arranged when being inserted from backwards into said joining component, into the desired final disposition which they must adopt upon arriving at the front portion of the joining component and which resembles the disposition of the holding grooves into which they are to be inserted by simply inserting the bared cable from backwards into the joining component.

2. A plug according to claim 1 in which the holding grooves (25) are built up from a set of holding Pins (M) made of hard metal and pressed side against side and against a base plate (4) made of hard metal,
— this set of holding pins being compressed laterally between guide pins (G1 ... G6) made of hard metal and pressed side against side and against the same base plate, certain of these guide pins being connection guide pins (G1, G4) which protrude or recede with respect to the front face in order to guide the connection component with respect to a complementary plug, characterized by the fact that said joining guide means are constituted by certain others (G5, G6) of said guide pins and protrude rearwardly from the connection component.

3. A plug according to claim 1, in which said holding grooves form two superposed plane layers, characterized in that the distributor (100, 101, 102) forms two distribution passages, the cross-section of these two passages forming, at the rear of said distributor, substantially two halves of the same circle separated by a diameter which is parallel to said plane layers, the cross-section of each of these passages subsequently changing progressively into a rectangular shape with the length of the rectangle substantially in line with one of said plane layers, said cross-section then being progressively separated into several individual passages by separators (110) which extend from the large sides of the rectangle, the front ends of said individual passages being disposed substantially in line with said holding grooves.

4. A plug according to claim 1, characterized in that the distribution passage has an upper wall and a lower wall each formed by a distinct portion of the distributor, these two portions (102, 101) being separable from each other so as to allow firstly the laying of the optical fibres (18) on a first portion (101) and then to force them to be distributed suitably by pressing the second portion (102) against the first.

5. A plug according to claim 4, characterized in that the distributor forms two superposed distributor passages and has three portions (100, 101, 102) of which the intermediate portion (101) forms a wall of each of these two distributor passages.

0 008 980

FIG.1

FIG.2

1

FIG.3

FIG.4

FIG.5

FIG.6

0 008 980

0 008 980

## FIG.7

## FIG.8

# FIG.9

# FIG.10

0008980

# FIG.11

0008 980

## FIG.12

## FIG.13

0 008 980

# FIG.14

# FIG.15

# FIG.16

# FIG.17

# FIG.18